(19)

**Europäisches Patentamt**
**European Patent Office**
**Office européen des brevets**

(11) **EP 4 564 239 A1**

(12) **EUROPEAN PATENT APPLICATION**

(43) Date of publication:
04.06.2025 Bulletin 2025/23

(21) Application number: 23307115.8

(22) Date of filing: 01.12.2023

(51) International Patent Classification (IPC):
*G06N 10/40* (2022.01)

(52) Cooperative Patent Classification (CPC):
G06N 10/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **Pasqal**
**91300 Massy (FR)**

(72) Inventor: **VANEECLOO, Julien**
**91300 Massy (FR)**

(74) Representative: **Lavoix**
**2, place d'Estienne d'Orves**
**75441 Paris Cedex 09 (FR)**

(54) **A METHOD FOR IMAGING NEUTRAL ATOMS FORMING AN ARRAY OF QUBITS**

(57) The invention relates to a method for imaging neutral atoms forming an array of qubits, the neutral atoms having a plurality of energy states comprising: a dark state, a fundamental state, an intermediate state and an excited state, the method comprising:
- addressing a first laser beam on the array of qubits so as to transfer neutral atoms in the fundamental state to the dark state,
- addressing a second laser beam on the array of qubits so as to transfer neutral atoms in the excited state to the fundamental state,
- imaging the array of qubits, the generated image(s) enabling to obtain a state for each neutral atom of the array of qubits at the end of a quantum computation comprising at least an analog quantum computation operation.

10

12 —— 16

FIG.1

**Description**

TECHNICAL FIELD OF THE INVENTION

The present invention concerns a method for imaging neutral atoms forming an array of qubits so as to obtain the states of the neutral atoms after a quantum computation, comprising at least an analog quantum computation operation, has been performed on the array of qubits. The present invention also concerns an associated system and an associated quantum computer.

BACKGROUND OF THE INVENTION

Contemporary quantum computers and Noisy Intermediate-Scale Quantum (NISQ) computing devices usually require several elaborate operations to prepare a so-called quantum register for storing qubits before actual computing computations can be performed on the qubits.

For example, each computation cycle comprises: preparing the quantum register in a desired configuration, performing quantum computation operations on the quantum register, and reading out the result of the quantum computation operations.

This computation cycle is generally repeated several times when the quantum computing device is in operation.

There is a need to reduce the time required to prepare the quantum register in order to increase the repetition rate of the quantum computer (e.g., the frequency at which the computation cycles can be repeated on the quantum computing device).

For neutral atom-based quantum computers, the different steps in a computing cycle usually comprise the following:

- An atom reservoir such as a magneto-optical trap (MOT) is loaded to trap and cool down atoms.
- Tweezers are then overlapped with the MOT to load each trap. Stochastically, the traps each end up with one atom captured therein with a probability of capture of approximately 50 %.
- The atom array is imaged to identify the empty sites. There is then a rearrangement process to prepare a defect-free pattern.

There is then a computation step, which depends on the operation mode of the device: analog or digital. The analog mode is of particular interest for solving graph problems or perform quantum simulations. It relies on non-trivial evolutions of a spin system where entanglement is induced by Rydberg excitations. After a computation of a few microseconds, the atom array is imaged to identify in which state are each atoms: either fundamental state (also called ground state) or excited state (Rydberg).

To obtain this information, the technique currently used relies on a destructive readout: when the tweezers are turned ON, Rydberg atoms are repelled from the trap in opposition to atoms in their ground state. After a certain amount of time, atoms in their Rydberg states are lost and by using fluorescence imaging, the empty sites are identified as being Rydberg excitations.

However, as a result, many of the atoms are lost and the quantum processor unit has to start a new cycle from scratch to prepare an atom array again. The computation time remains very small compared to the preparation time ( ~3 $\mu$s versus ~300 ms, i.e 3 order of magnitude for atoms).

An alternative approach is to use ionization as demonstrated with Strontium but this method remains destructive for Rydberg excitation.

SUMMARY OF THE INVENTION

Hence, there exists a need for a method enabling to obtain the states of neutral atoms forming an array of qubits after performing a quantum computation, comprising at least an analog quantum computation operation, on the array of qubits, while reducing the time to perform a series of calculation cycles.

To this end, the invention relates to a method for imaging neutral atoms forming an array of qubits so as to obtain the states of the neutral atoms after a quantum computation, comprising at least an analog quantum computation operation, has been performed on the array of qubits, the neutral atoms having a plurality of energy states comprising at least: a dark state, a fundamental state, an intermediate state and an excited state, each neutral atom being either in the excited state or in the fundamental state at the end of said quantum computation, the method comprising the following phases:

- addressing a first laser beam on the array of qubits so as to transfer neutral atoms in the fundamental state to the dark state,
- addressing a second laser beam on the array of qubits so as to transfer neutral atoms in the excited state to the fundamental state,
- imaging the array of qubits, the imaging phase comprising:

    • addressing a third laser beam on the array of qubits so as to transfer the neutral atoms in the fundamental state to the intermediate state,
    • collecting, by a detector, photons emitted by the neutral atoms passing from the intermediate state to the fundamental state by spontaneous emission,
    • generating, by the detector, image(s) of the neutral atoms passing from the intermediate state to the fundamental state by spontaneous emission as a function of the photons collected by the detector, the generated image(s) enabling to obtain a state for each neutral atom of the array of qubits at the end of the quantum computation, the neutral atoms imaged on the generated image(s) being considered as being in the excited state at the end of the quantum computation and the other neutral atoms being considered as being in the fundamental state at the end of the quantum computation.

The method according to the invention may comprise one or more of the following features considered alone or in any combination that is technically possible:

- the method also comprises a verification phase comprising:

  - addressing a fourth laser beam on the array of qubits so as to transfer neutral atoms in the dark state to the fundamental state,
  - additional imaging of the array of qubits by:

    • addressing the third laser beam on the array of qubits so as to transfer the neutral atoms in the fundamental state to the intermediate state,
    • collecting, by a detector, photons emitted by the neutral atoms passing from the intermediate state to the fundamental state by spontaneous emission,
    • generating, by the image generator, additional image(s) of the neutral atoms passing from the intermediate state to the fundamental state by spontaneous emission as a function of the photons collected by the detector, the generated image(s) enabling to determine eventual atoms lost during the computation and/or the previous steps of the imaging method, advantageously the generated image(s) enabling to determine a fidelity metric for the determined states of the neutral atoms at the end of the quantum computation;

- the method comprises a phase of refilling trapping sites of the array of qubits having no atom at the end of the verification phase so as to obtain a prepared array of qubits, the prepared array of qubits is preferentially a defect-free array of qubits;
- the method comprises a phase of performing a quantum computation on the prepared array of qubits, the quantum computation comprising at least an analog quantum computation operation, and repeating the phases of addressing the first laser beam, addressing the second laser beam, and imaging the array of qubits so to obtain a state for each neutral atom of the array of qubits at the end of the quantum computation;

- the transfer of neutral atoms from the fundamental state to the dark state is obtained by optical pumping with the first laser beam;
- the second laser beam is a near resonant laser beam for the transition between the excited state and the intermediate state so that neutral atoms in the excited state are first transferred in the intermediate state and then in the fundamental state by spontaneous emission;
- the second laser beam has a detuning which is chosen as a function of the geometry of the array of qubits so as to increase the effective transfer rate of neutral atoms from the excited state to the fundamental state as compared to a transfer rate that would have been obtained without detuning;
- the geometry of the array of qubits define the maximal number of adjacent neighbors for a neutral atom, the detuning of the second laser beam being comprised in an interval centered on an optimal value, the optimal value being equal in absolute value to a predetermined shift multiply by half the maximal number of adjacent neighbors, the boundaries of the interval being the optimal value minus $\varepsilon$ and the optimal value plus $\varepsilon$, $\varepsilon$ being a predetermined value, the detuning being preferably equal to the optimal value;
- the neutral atoms forming the array of qubits belong to the alkali column of the periodic table or to the alkaline earth column of the periodic table;
- the neutral atoms forming the array of qubits are Rubidium atoms, the excited state being a Rydberg state, the intermediate state being the state $5P_{3/2}$, F=3, $m_F$=3, the fundamental state being the state $5S_{1/2}$, F=2, $m_F$=2, the dark state being the state $5S_{1/2}$, F=1, with:

  • F=J+I, F being the total atomic angular momentum,
  • J=S+L, J being the total electron angular momentum,
  • S the spin of the electron,
  • I the spin of the nucleus,
  • L the angular momentum, and
  • $m_F$ the eigenvalue of the total atomic angular momentum operator;

- the first laser beam has a wavelength corresponding to the transitions lines D1 and D2 of the Rubidium 87, the second laser beam being a near-resonant laser beam for the transition between the excited state and the intermediate state at a wavelength comprised between 479 nm and 481 nm;

The invention also relates to a system for imaging neutral atoms forming an array of qubits so as to obtain the states of the neutral atoms after at least an analog computation has been performed on the array of qubits, the neutral atoms having a plurality of energy states comprising at least: a dark state, a fundamental state, an intermediate state and an excited state, each neutral atom being either in the excited state or in the fundamental state at the end of the analog computation, the system comprising:

- a first laser source suitable to address a first laser beam on the array of qubits so as to transfer neutral atoms in the fundamental state to the dark state,
- a second laser source suitable to address a second laser beam on the array of qubits so as to transfer neutral atoms in the excited state to the fundamental state,
- an imaging device comprising:

  - a third laser source suitable to address a third laser beam on the array of qubits so as to transfer the neutral atoms in the fundamental state to the intermediate state,
  - a detector suitable for collecting photons emitted by the neutral atoms passing from the intermediate state to the fundamental state by spontaneous emission, and for generating image(s) of the neutral atoms passing from the intermediate state to the fundamental state by spontaneous emission as a function of the collected photons, the generated image(s) enabling to obtain a state for each neutral atom of the array of qubits at the end of the analog computation, the neutral atoms imaged on the generated image(s) being considered as being in the excited state at the end of the analog computation and the other neutral atoms being considered as being in the fundamental state at the end of the analog computation.

The invention also relates to a quantum computer comprising:

- a system for generating an array of qubits and performing at least analog computations on the array of qubits, the array of qubits being formed by neutral atoms, the neutral atoms having a plurality of energy states comprising at least: a dark state, a fundamental state, an intermediate state and an excited state, and
- a system for imaging neutral atoms forming an array of qubits so as to obtain the states of the neutral atoms after at least an analog computation has been performed on the array of qubits, the imaging system being as previously described.

BRIEF DESCRIPTION OF THE DRAWINGS

The invention will be easier to understand in view of the following description, provided solely as an example and with reference to the appended drawings in which:

- Figure 1 is a schematic view of an example of a quantum computer comprising a system for generating an array of qubits and performing analog computations on the array of qubits, and a system for imaging the array of qubits,
- Figure 2 is a schematic view of an example of an array of qubits and a system for imaging the array of qubits,
- Figure 3 is an example of an organigram of a non-destructive method for obtaining the states of neutral atoms forming an array of qubits after performing an analog computation on the array of qubits,
- Figure 4 is an example of a transfer of neutral atoms of Rubidium from an excited state (Rydberg state, here 60S of Rubidium 87 but other states could also be used) to a fundamental state,
- Figure 5 is an example of a graph illustrating the probability for a Rubidium atom to still being in the Rydberg state after application of the method, as a function of the application time according to a model (dotted line) and a simulation (solid line) when considering two interacting Rydberg atoms, and
- Figure 6 is an example of a graph illustrating the probability for a Rubidium atom to still being in the Rydberg state after application of the method, as a function of the application time according to a model (dotted line) and a simulation (solid line) when considering six interacting Rydberg atoms and an adapted detuning for a second laser beam aiming at transferring the atoms in the excited state to the fundamental state.

DETAILED DESCRIPTION OF SOME EMBODIMENTS

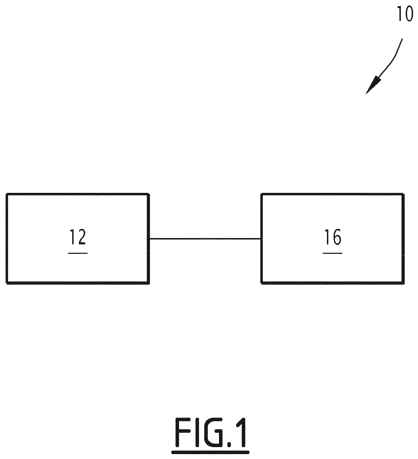

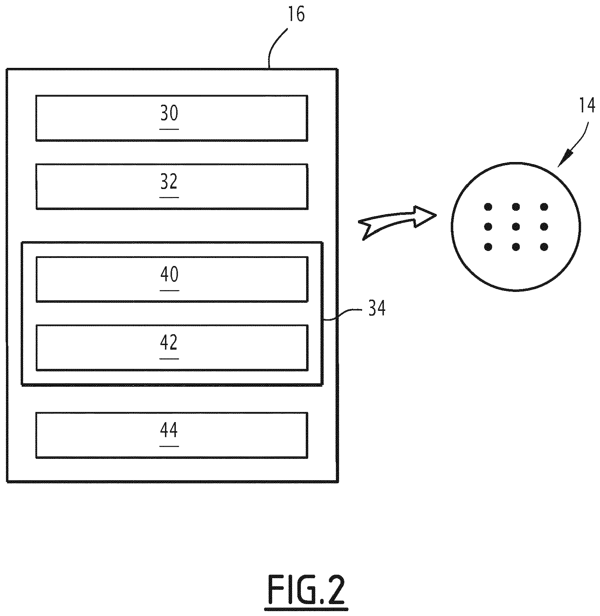

In the description, the terms "suitable for", "able to" and "configured for" are considered equivalent.
In the description, the term "analog computation" stands for "analog quantum computation".
An example of a quantum computer 10 is illustrated on figure 1.
The quantum computer 10 (also called quantum processing unit, or QPU) comprises a system 12 for generating an array of qubits 14 (illustrated on figure 2) and performing analog computations on the array of qubits 14, and a system 16 for imaging the array of qubits 14. The array of qubits 14 is also called a qubit register or a quantum register.
The system 12 for generating an array of qubits 14 comprises, for example, a source of particles, a generator of trapping sites for particles, a rearranging unit (optional) and hardware elements.

In the case of neutral atoms, the source of particles comprises a vacuum chamber in which the particles (for example atoms) are located. In particular, during use, a vacuum is created in the vacuum chamber and a dilute atomic vapor is formed in the vacuum chamber. Many cooling processes can be used to cool the dilute atomic vapor, for instance laser cooling, so that the atoms can be trapped. Other embodiments are nonetheless possible.

The generator of trapping sites is able to generate an array of trapping sites for trapping particles, for example in the vacuum chamber for neutral atoms. Each trapped particle forms a qubit. The array of trapped particles forms an array of qubits 14.

In an example of implementation, the generator of trapping sites comprises a laser source, a beam shaper and a focusing unit.

The laser source is able to generate a laser beam.

The beam shaper is able to shape the laser beam (e.g., to impart a specific phase/intensity pattern to the laser beam) so as to obtain an array of trapping sites for particles when the laser beam is focused.

The beam shaper is, for example, a spatial light modulator (SLM), such as an optical phase modulator, preferably a liquid crystal optical modulator (LCOS-SLM). In another example, the beam shaper is an acousto-optical deflector (AOD), or a device with metasurfaces, or micro lens arrays, for example with fixed phase pattern (lithography).

The focusing unit is able to focus the shaped laser beam on a target region of the vacuum chamber so as to generate the array of trapping sites.

The rearranging unit is able to rearrange particles trapped in the trapping sites generated by the generator of trapping sites, so as to obtain a predefined array of qubits 14. The rearranging unit comprises for example optical tweezers (laser) enabling to move the particles from one trapping sites to another until obtaining the predefined array of qubits 14. Other embodiments are nonetheless possible.

The hardware elements enable to manipulate the qubits of the array of qubits 14 so as to perform quantum operations on the qubits. Typically, the quantum computer 10 uses the quantum properties of matter, such as superposition and entanglement, to perform operations on the qubits. In particular, a qubit refers to a two-level quantum system.

In a non-limiting example, a qubit may comprise two basic quantum states I0> and I1> representing the possible quantum states of the qubit. According to the superposition principle of quantum mechanics, any superposition of the form al0> + bI1> (a and b being complex numbers and aa*+bb*=1) is a possible quantum state of the qubit.

Examples of quantum computing devices based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327. Other embodiments are nonetheless possible.

The particles forming the array of qubits 14 are neutral atoms.

The neutral atoms forming the array of qubits 14 have a plurality of energy states comprising at least: a dark state, a fundamental state, an intermediate state and an excited state.

Preferably, the considered dark state, fundamental state, intermediate state and excited state are listed in ascending order of associated energy. Other embodiments are nonetheless possible.

A dark state (or buffer state) refers to a state of an atom, which is not coupled to an excited light (laser). This means that an atom in a dark state will not change its state only by the presence of the excited light, but depending on the wavelength, and/or polarization of the excited light.

The excited state is, preferably, a Rydberg state.

The intermediate state is a state of an atom having a short lifetime (inferior to 50 ns), compared to the lifetime of a corresponding excited state (Rydberg state). This results in a quick return to a fundamental state by spontaneous emission. Typically, the lifetime in the Rydberg state is of the order of 100 $\mu$s and the lifetime in the intermediate state is of the order of 10 ns.

Hence, the atoms can be transferred from their excited state to their intermediate state, for example using a laser to induce a population transfer (laser-assisted population transfer) between the excited state and the intermediate state. Then, the atoms can be transferred from their intermediate state to their fundamental state by spontaneous emission.

Preferably, the neutral atoms forming the array of qubits 14 belong to the alkali column of the periodic table or to the alkaline earth column of the periodic table.

The neutral atoms are advantageously chosen among: Rubidium atoms, Cesium atoms, Sodium atoms and Strontium atoms.

The system 16 for imaging the array of qubits 14, called imaging system 16, is suitable for generating images of the array of qubits 14. The images are for example images of the array of qubits 14 taken during the preparation (and rearrangement process) of the array of qubits 14, or taken after a calculation has been performed on the array of qubits 14, or taken when calculations are being performed (for mid-circuit readout, for example between two calculations).

The imaging system 16 is of particular interest for imaging the neutral atoms forming the array of qubits 14 after an analog computation has been performed on the array of qubits 14, so as to obtain the states of the neutral atoms after the analog computation.

An analog computation for a quantum system consists in fixing some parameters of a quantum system and let it evolves continuously toward a result. An analog computation is different from a digital computation, where algorithms are executed by implementing sequences of discrete operations, commonly known as quantum gates.

In particular, the analog computation consists in exciting neutral atoms of the array of qubits 14 from their fundamental state to their excited state. Hence, at the end of the computation, the neutral atoms are either in the fundamental state or in the excited state (up to an error during computation where some atoms can end up in another electronic state). The atoms in the excited state can then return to their fundamental state by spontaneous emission depending on the lifetime of the neutral atoms in the considered excited state. The lifetime of a Rydberg state is typically around 100 $\mu$s for Rubidium atoms.

As illustrated on figure 2, the imaging system 16 comprises a first laser source 30, a second laser source 32 and an imaging device 34 comprising a third laser source 40 and a detector 42. Optionally, the imaging system 16 also comprises a fourth laser source 44.

The first laser source 30 is suitable to address a first laser beam on the array of qubits 14 so as to transfer neutral atoms in the fundamental state to the dark state.

The first laser source 30 can be obtained by detuning slightly one beam of the laser source used for the generator of trapping sites, for example using the MOT beams (with no repumper).

The second laser source 32 is suitable to address a second laser beam on the array of qubits 14 so as to transfer neutral atoms in the excited state to the fundamental state.

The imaging device 34 is suitable for imaging neutral atoms of the array of qubits, which emit photons by spontaneous emission.

The third laser source 40 of the imaging device 34 is suitable to address a third laser beam on the array of qubits 14 so as to excite the neutral atoms in the fundamental state to the intermediate state.

In an embodiment, the third laser source 40 is the first laser source 30 whose polarization has been modified such that it addresses a stretch state (cycling transition). In a variant, the third laser source 40 and the first laser source 30 are different laser sources.

The detector 42 of the imaging device 34 is suitable to generate image(s) of the neutral atoms emitting photons when passing from the intermediate state to the fundamental state by spontaneous emission. Hence, the detector 42 is able to carry out the collection of photons and the generation of images depending on the collected photons. Typically, the detector 42 comprises a sensor to collect photons and an associated electronic circuitry to generate images depending on the collected photons.

The detector 42 comprises, for example, a camera such as a charge-coupled device (CCD) camera, an electron multiplication charged-coupled device (EMCCD) camera, a CMOS camera, or any suitable imaging technology.

As this will be described later in the description, the generated image(s) enable to obtain a state for each neutral atom of the array of qubits 14 at the end of the analog computation. The neutral atoms visible on the generated image(s) are considered as being in the excited state at the end of the analog computation and the other neutral atoms are considered as being in the fundamental state at the end of the analog computation.

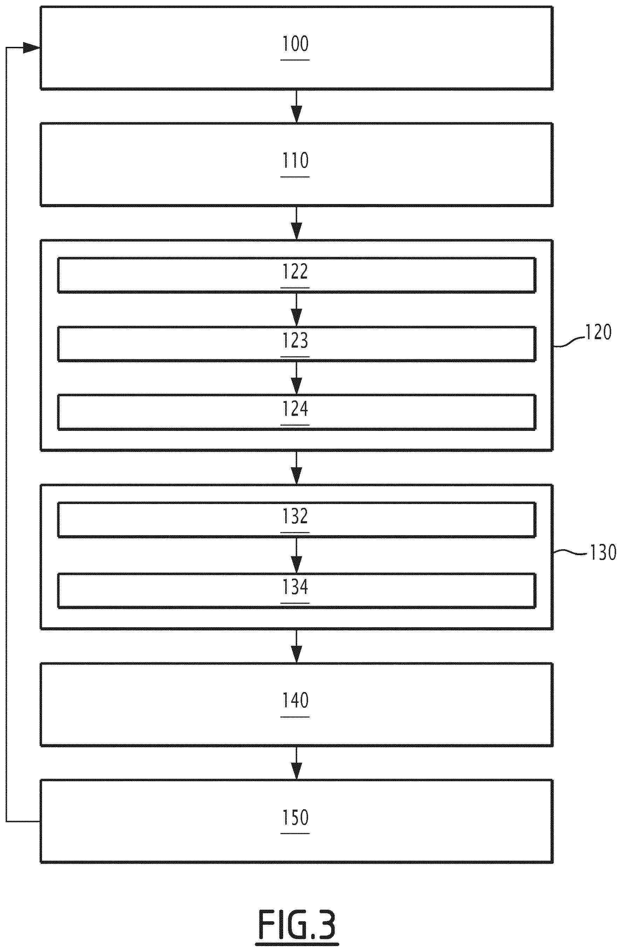

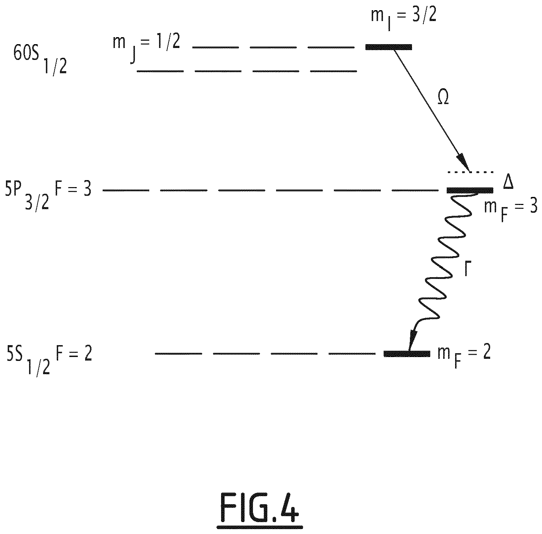

An example of a method for imaging neutral atoms forming an array of qubits 14 so as to obtain the states of the neutral atoms after an analog computation has been performed on the array of qubits 14, will now described with reference to figure 3 and to the particular examples of figures 4 to 6.

The imaging method is performed on an array of qubits 14 formed of atoms after an analog computation has been performed on the array of qubits 14. The atoms are initially in their fundamental state. The analog computation enables to excite some of the atoms from their fundamental state to their excited state. Hence, at the end of the analog computation, the atoms are either in their fundamental state, or in their excited state.

The imaging method comprises a phase 100 of addressing a first laser beam on the array of qubits 14 so as to transfer neutral atoms in the fundamental state to the dark state. The phase 100 is, for example, carried out using the first laser source 30 of the imaging device 34.

The first laser beam is applied on the whole array of qubits 14.

Preferably, the transfer of neutral atoms from the fundamental state to the dark state is carried out by optical pumping with the first laser beam. Optical pumping consists in transferring a population of atoms from one, or several, electronic state(s) to a new, and well identified state. The imaging method comprises a phase 110 of addressing a second laser beam on the array of qubits 14 so as to transfer neutral atoms in the excited state to the fundamental state. The phase 110 is, for example, carried out using the second laser source 32 of the imaging device 34.

The second laser beam is applied on the whole array of qubits 14.

Preferably, the second laser beam is a near resonant laser beam for the transition between the excited state and the intermediate state so that neutral atoms in the excited state are first transferred in the intermediate state. The population transfer is induced by the second laser beam (the atoms are progressively and coherently transferred in the intermediate state).

Then, the neutral atoms in the intermediate state are transferred in the fundamental state by spontaneous emission.

Preferably, the second laser beam has a detuning which is chosen as a function of the geometry of the array of qubits 14 so as to increase the effective transfer rate of neutral atoms from the excited state to the fundamental state as compared to a transfer rate that would have been obtained without detuning. In particular, the detuning is chosen so as to compensate the Van der Waals energy shift induced by the presence of adjacent neutral atoms.

A detuning for a laser is the tuning of a laser to a frequency that is slightly off from a quantum system's resonant frequency (here the frequency transition between the excited state and the intermediate state). The quantum system's resonant frequency is the frequency in the absence of interactions and external stray fields.

The effective transfer rate from the excited state to the fundamental state is for example given by the following formula (when $\Omega \gg \gamma$):

$$\Gamma_{eff} = \frac{(\Gamma \Omega^2)}{\Omega^2 + D^2}$$

Where:

- $\Omega$ is the Rabi frequency associated with the transition between the excited state and the intermediate state,
- $\Gamma$ is the decay rate for the transition between the intermediate state and the fundamental state,
- $D$ is the detuning of the second laser beam, and
- $\gamma$ is the decay rate of the Rydberg state.

In an example, the geometry of the array of qubits 14 defines the maximal number of adjacent neighbors for a neutral atom. Preferably, the detuning of the second laser beam is comprised in an interval centered on an optimal value equal in absolute value to a predetermined shift multiply by half the maximal number of adjacent neighbors. The boundaries of the interval are for example the optimal value minus $\varepsilon$ and the optimal value plus $\varepsilon$. $\varepsilon$ is a predetermined value. $\varepsilon$ is for example comprised between 0 and N.$U_{vdw}$, where N is the number of neighbors and $U_{vdw}$ the interaction energy between two Rydberg atoms. Advantageously, the detuning is equal to the optimal value (N.$U_{vdw}$/2).

The detuning enables taking into account and compensating at least in part the blockade between Rydberg excitations due to the presence of the adjacent neighbors. Indeed, the blockade between Rydberg excitations induces a detuning that is equal to $\Delta_{VDW}$. $\Delta_{VDW}$ is proportional to $N$. Uvdw, where $U_{vdw}$ is the interaction energy between two Rydberg atoms.

Preferably, the second laser beam has a detuning which is chosen so that the time transfer for transferring the neutral atoms from the excited state to the fundamental state is short as compared to the lifetime in the excited state (typically a factor 50).

Preferably, the second laser beam has a detuning which is chosen so that the time transfer for transferring the neutral atoms from the excited state to the fundamental state is shorter than the time during which the trap laser is kept off, typically 2-5 $\mu$s, because the

atoms have an important probability to be lost afterwards (not trapped during calculation).

Preferably, the power of the second laser beam is increased (increase of the Rabi frequency $\Omega$) in order to reduce the transfer time for transferring the neutral atoms from the excited state to the fundamental state. This enables to improve the fidelity for the detection.

The imaging method comprises a phase 120 of imaging the array of qubits 14.

The imaging phase 120 comprises a step 122 of addressing a third laser beam on the array of qubits 14 so as to excite the neutral atoms in the fundamental state to the intermediate state. The step 122 is, for example, carried out using the third laser source 40 of the imaging device 34.

The third laser beam is applied on the whole array of qubits 14.

The imaging phase 120 comprises a step 123 of collecting, by the detector 42, photons emitted by the neutral atoms passing from the intermediate state to the fundamental state by spontaneous emission.

The imaging phase 120 then comprises a step 124 of generating, by the detector 42, of image(s) of the neutral atoms emitting photons when passing from the intermediate state to the fundamental state by spontaneous emission, as a function of the photons collected by the detector 42.

The generated image(s) enables to obtain a state for each neutral atom of the array of qubits 14 at the end of the analog computation. Such states are obtained with reduced losses as compared to a classical imaging. The neutral atoms imaged on the generated image(s) are considered as being in the excited state at the end of the analog computation and the other neutral atoms are considered as being in the fundamental state at the end of the analog computation. The determination of the states of the neutral atoms of the array of qubits 14 is for example performed on the basis of the generated image(s) during a post-treatment phase. For example, the determination is performed automatically by a classical computer (image processing). In a variant, it is performed by an operator.

Preferably, the imaging method comprises a verification phase 130.

The verification phase 130 comprises a step 132 of addressing a fourth laser beam on the array of qubits 14 so as to transfer neutral atoms in the dark state to the fundamental state.

In an example, the transfer from the dark state to the fundamental state is done by optical pumping with the fourth laser beam. In a variant, this could also be done with radio frequency in the case of atoms belonging to the Alkali column of the periodic table.

The verification phase 130 then comprises a step 134 of additional imaging of the array of qubits 14. The additional imaging step 134 comprises:

- addressing of the third laser beam on the array of qubits 14 so as to excite the neutral atoms in the fundamental state to the intermediate state. The third laser beam is emitted by the third laser source 40 of the imaging device 34.

- collecting, by the detector 42, photons emitted by the neutral atoms passing from the intermediate state to the fundamental state by spontaneous emission.
- generating, by the detector 42, additional image(s) of the neutral atoms emitting photons when passing from the intermediate state to the fundamental state by spontaneous emission as a function of the photons collected by the detector 42.

The generated additional image(s) enable to determine the eventual atoms lost during the computation and/or the readout (previous steps of the imagining method).

Advantageously, the additional generated image(s) enable to determine a fidelity metric for the determined states of the neutral atoms at the end of the analog computation). The determination of the fidelity metric is for example performed during a post-treatment phase. For example, the determination is performed automatically by a classical computer (image processing). In a variant, it is performed by an operator.

The fidelity metric is an indicator enabling to estimate the precision of the states determined for the neutral atoms at the end of the analog computation. Typically, the fidelity metric can be downgraded when not all neutral atoms have been transferred from the excited state to the fundamental state at the end of the phase of addressing the second laser beam or when an error occurs during the analog computation.

For example, the fidelity metric can be a numerical value, such as a rate or a ratio or any other suitable indicator.

For example, the fidelity metric is maximal (equal to 100 %) when, at the end of the verification phase, each effective trapping sites is filled with a neutral atom, which is visible on the additional image(s). The fidelity metric is downgraded when one or several effective trapping sites of the array of qubits 14 are filled with no atoms on the additional image(s). An effective trapping site is a trap aiming at trapping an atom to form an initialized array of qubit at the beginning of an analog computation. Effective trapping sites are different from reservoir trapping sites. Reservoir trapping sites are used to trap atoms only during the initialization of the array of qubits 14, until the effective trapping sites are filled in with atoms. The reservoir trapping sites are emptied when the array of qubits has been prepared.

Optionally, the imagery method comprises a phase 140 of refilling effective trapping sites of the array of qubits 14 having no atom at the end of the verification phase so as to obtain a prepared array of qubits 14. The refilling is for example performed using a reservoir of atoms of the quantum computer 10 and hardware (optical tweezers) for manipulating the atoms and bring them to the empty effective trapping sites. The prepared array of qubits 14 is preferentially a defect-free array of qubits.

In this case, the method comprises advantageously a phase 150 of performing an analog computation on the prepared array of qubits 14. The phases of addressing the first laser beam, addressing the second laser beam, imaging the array of qubits 14 of the imagery method and optionally the verification phase, are then repeated so to obtain a state for each neutral atom of the array of qubits 14 at the end of the analog computation. These phases can be repeated for performing several computations cycles.

Example of implementation of the method for Rubidium atoms

In this example, the neutral atoms forming the array of qubits 14 are Rubidium atoms. As illustrated on figure 4, when applying the above method to Rubidium atoms:

- the excited state is a Rydberg state,

    ○ In this specific example, the excited state is the state $60S_{1/2}$, $m_J = 1/2$, $m_I = \frac{1}{2}$. However, in a variant, the excited state is any state $nS_{1/2}$ or $nD$, where n is an arbitrary integer. In the previous notations, S is related to the electronic state and the ½ number is the total angular momentum of the fine structure.

- the intermediate state is the state $5P_{3/2}$, F=3, $m_F$=3.
- the fundamental state is the state $5S_{1/2}$, F=2, $m_F$=2.
- the dark state is the state $5S_{1/2}$, F=1.

With :

- F=J+I, F being the total atomic angular momentum.
- J=S+L, J being the total electron angular momentum,
- S the spin of the electron,
- I the spin of the nucleus,
- L the angular momentum,
- $m_F$ the eigenvalue of the total atomic angular momentum operator,
- $m_J$ the eigenvalue of the total electron angular momentum operator, and
- $m_I$ the eigenvalue of the nucleus angular momentum operator.

In this example, the first laser beam has preferably a wavelength corresponding to the transitions lines D1 and D2 of the Rubidium 87. The second laser beam is a near-resonant laser beam for the transition between the excited state and the intermediate state at a wavelength comprised between 479 nm and 481 nm (so as to cover different possible Rydberg states).

In this example, the addressing phase 100 enables to transfer the atoms from the fundamental state (F=2, $m_F$=2) to the dark state (F=1) by pumping between F=2 and F'=2 at 780 nm or 795 nm. In particular, the polarization is not π polarized (F=2 $m_F$=0-->F'=0, $m_F$'=0 is not allowed). The duration of this phase is a few time the lifetime of the intermediate state (~1/Γ = 25 ns). So after -200 ns more than 99% of the population should be transferred.

Then, the addressing phase 200 enables to transfer atoms in the excited state (Rydberg state) to the fundamental state (F=2, $m_F$=2).

In the absence of Rydberg blockade, and by working with a detuning of zero, the transfer is achieved in typically 1/Γ. 130 ns is sufficient to get almost all the population transferred (>99%), in the absence of interactions, which is negligible compared to the lifetime of the Rydberg excitation (100 μs).

In a square lattice, an atom has four neighbors and, in current platforms, two n=60 S Rydberg state separated by 5 μm induces a shift of frequency of U= 9 MHz, the resulting detuning is then $\Delta' = \Delta + U$. The frequency shift for one Rydberg atom surrounded by 4 Rydbergs is then U -4x9 MHz=36 MHz. In this case the effective transfer time is approximately -700 ns. By waiting 3 μs, the population transferred should reach 98.2% (transfer short as compared to the lifetime of the Rydberg excitation which is about 100 μs).

To improve this method, one way is to detune the laser by $\Delta = -2 \times 9$ *MHz* such that the effective detuning is at most $\Delta' = 2 \times 9$ *MHz* (for 4 Rydberg around one and less otherwise). In the absence of Rydberg excitations, the detuning is simply $\Delta' = \Delta = -2 \times 9$ *MHz*. Then, waiting 1 μs would result in a transfer of 99%.

The imaging phase 300 enables to image on the stretch transition between the fundamental state (F=2, $m_F$=2) and the intermediate space (F=3, $m_F$=3).

Figure 4 illustrates the mechanism to transfer the Rydberg excitation to the fundamental state F=2,$m_F$=2, even in the presence of Rydberg blockade (detuning Δ takes into account this contribution). The only decoherence channel from F=3, $m_F$=3 (5P) is F=2, $m_F$=2 (5S).

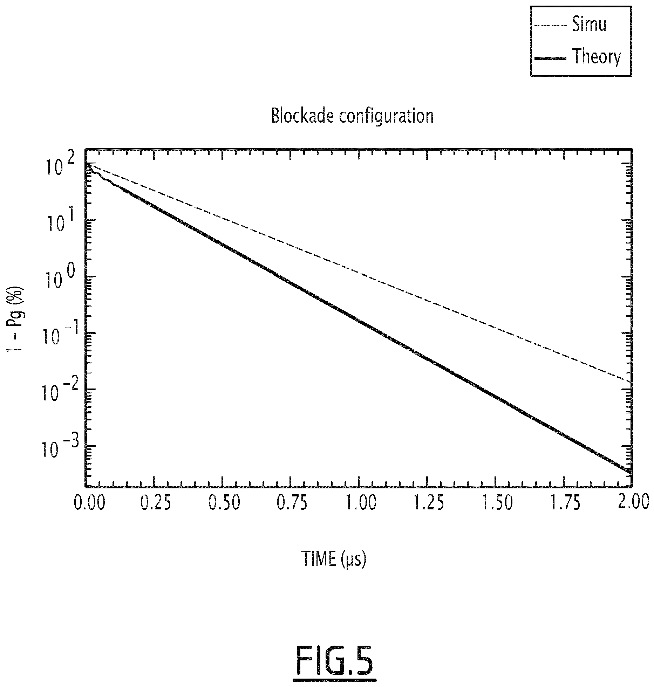

Figure 5 compares the model of effective transfer rate (in dotted line, previously established equation) with a simulation with two interacting Rydberg atoms in solid line. After 1 μs, the population transferred is above 99.9%.

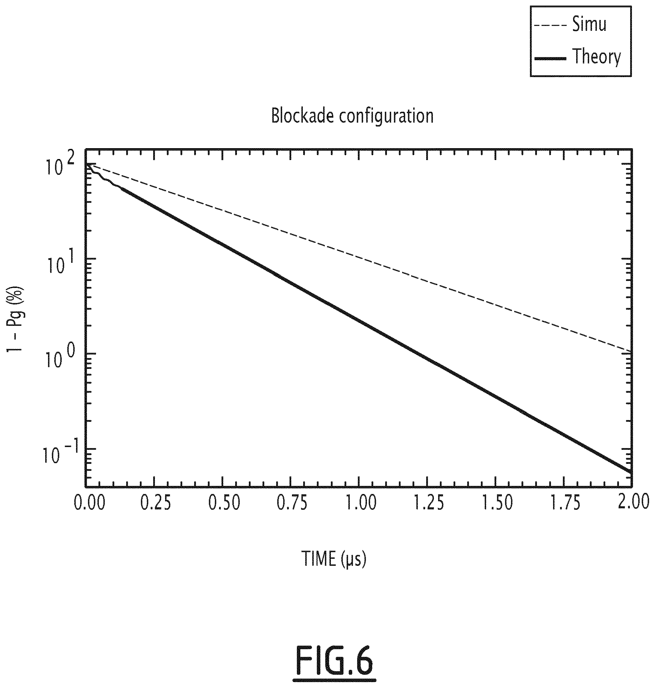

Figure 6 is similar to Figure 5 but with six interacting Rydberg atoms (hexagonal configuration). If we run the simulation with 6 Rydberg excitations in the blockade volume (Utot), assuming the detuning is adjusted to be - Utot/2, we get the following result: After 1 μs, we reach a population transfer of -99% (solid line).

Hence, by the different atom transfer steps, the described method enables to generate image(s) of the atoms, which are in the excited states at the end of the analog computation. The state of the atoms in the fundamental state at the end of the analog computation can be deduced as being the atoms not present (not visible) on the generated images (because not emitting any photons).

As compared to the state of the art, the atoms in the excited state do not need to be expulsed when imaging the array of qubits 14. Such atoms can then be used again for further computation.

Hence, the method enables obtaining the states of neutral atoms forming an array of qubits 14 after performing an analog computation on the array of qubits 14, while reducing the time to perform a series of calculations (because not all the atoms have to be loaded again in the register).

The person skilled in the art will understand than the description illustrates the specific example of Rubidium atoms. However, it applies to other types of atoms, in particular atoms belonging to the alkali column of the periodic table.

In addition, the description illustrates the specific case of analog quantum computation. However, it should be noted that the invention also works for hybrid approaches where both analog and digital quantum computations operations are performed during a given calculation insofar as at least an analog computation operation is performed.

For example, analog quantum computation operations can be understood as quantum computation operations performed over the entire qubit register, by opposition to digital quantum computation, which is a mode of operation in which sequences of discrete operations, also known as quantum gates, are implemented specifically over a selected number of qubits of the register.

The person skilled in the art will understand that the embodiments and variants described above in the description can all be combined provided that they are technically compatible. Many other embodiments are possible without departing from the scope of the invention defined in the appended claims.

**Claims**

1. A method for imaging neutral atoms forming an array of qubits (14) so as to obtain the states of the neutral atoms after a quantum computation, comprising at least an analog quantum computation operation, has been performed on the array of qubits (14), the neutral atoms having a plurality of energy states comprising at least: a dark state, a fundamental state, an intermediate state and an excited state, each neutral atom being either in the excited state or in the fundamental state at the end of said quantum computation, the method comprising the following phases:

   - addressing a first laser beam on the array of qubits (14) so as to transfer neutral atoms in the fundamental state to the dark state,
- addressing a second laser beam on the array of qubits (14) so as to transfer neutral atoms in the excited state to the fundamental state,
- imaging the array of qubits (14), the imaging phase comprising:

   • addressing a third laser beam on the array of qubits (14) so as to transfer the neutral atoms in the fundamental state to the intermediate state,
   • collecting, by a detector (42), photons emitted by the neutral atoms passing from the intermediate state to the fundamental state by spontaneous emission,
   • generating, by the detector (42), image(s) of the neutral atoms passing from the intermediate state to the fundamental state by spontaneous emission as a function of the photons collected by the detector (42), the generated image(s) enabling to obtain a state for each neutral atom of the array of qubits (14) at the end of the quantum computation, the neutral atoms imaged on the generated image(s) being considered as being in the excited state at the end of the quantum computation and the other neutral atoms being considered as being in the fundamental state at the end of the quantum computation.

2. A method according to claim 1, wherein the method also comprises a verification phase comprising:

   - addressing a fourth laser beam on the array of qubits (14) so as to transfer neutral atoms in the dark state to the fundamental state,
   - additional imaging of the array of qubits (14) by:

      • addressing the third laser beam on the array of qubits (14) so as to transfer the neutral atoms in the fundamental state to the intermediate state,
      • collecting, by a detector (42), photons emitted by the neutral atoms passing from the intermediate state to the fundamental state by spontaneous emission,
      • generating, by the image generator (43), additional image(s) of the neutral atoms passing from the intermediate state to the fundamental state by spontaneous emission as a function of the photons collected by the detector (42), the generated image(s) enabling to determine eventual atoms lost during the computation and/or the previous steps of the imaging method, advantageously the generated image(s) enabling to determine a fidelity metric for the determined states of the neutral atoms at the end of the quantum computation.

3. A method according to claim 2, wherein the method comprises a phase of refilling trapping sites of the array of qubits (14) having no atom at the end of the verification phase so as to obtain a prepared array of qubits (14), the prepared array of qubits (14) is preferentially a defect-free array of qubits.

4. A method according to claim 3, wherein the method comprises a phase of performing a quantum computation on the prepared array of qubits (14), the quantum computation comprising at least an analog quantum computation operation, and repeating the phases of addressing the first laser beam, addressing the second laser beam, and imaging the array of qubits (14) so to obtain a state for each neutral atom of the array of qubits (14) at the end of the quantum computation.

5. A method according to any one of claims 1 to 4, wherein the transfer of neutral atoms from the fundamental state to the dark state is obtained by optical pumping with the first laser beam.

6. A method according to any one of claims 1 to 5, wherein the second laser beam is a near resonant laser beam for the transition between the excited state and the intermediate state so that neutral atoms in the excited state are first transferred in the intermediate state and then in the fundamental state by spontaneous emission.

7. A method according to any one of claims 1 to 6, wherein the second laser beam has a detuning which is chosen as a function of the geometry of the array of qubits (14) so as to increase the effective transfer rate of neutral atoms from the excited state to the fundamental state as compared to a transfer rate that would have been obtained without detuning.

8. A method according to claim 7, wherein the geometry of the array of qubits (14) define the maximal number of adjacent neighbors for a neutral atom, the detuning of the second laser beam being comprised in an interval centered on an optimal value, the optimal value being equal in absolute value to a predetermined shift multiply by half the maximal number of adjacent neighbors, the boundaries of the interval being the optimal value minus $\varepsilon$ and the optimal value plus $\varepsilon$, $\varepsilon$ being a predetermined value, the detuning being preferably equal to the optimal value.

9. A method according to any one of claims 1 to 8, wherein the neutral atoms forming the array of qubits (14) belong to the alkali column of the periodic table or to the alkaline earth column of the periodic table.

10. A method according to any one of claims 1 to 8, wherein the neutral atoms forming the array of qubits (14) are Rubidium atoms, the excited state being a Rydberg state, the intermediate state being the state $5P_{3/2}$, F=3, $m_F$=3, the fundamental state being the state $5S_{1/2}$, F=2, $m_F$=2, the dark state being the state $5S_{1/2}$, F=1, with:

   • F=J+I, F being the total atomic angular momentum,
   • J=S+L, J being the total electron angular momentum,
   • S the spin of the electron,
   • I the spin of the nucleus,
   • L the angular momentum, and
   • $m_F$ the eigenvalue of the total atomic angular momentum operator.

11. A method according to claim 10, wherein the first laser beam has a wavelength corresponding to the transitions lines D1 and D2 of the Rubidium 87, the second laser beam being a near-resonant laser beam for the transition between the excited state and the intermediate state at a wavelength comprised between 479 nm and 481 nm.

12. A system (16) for imaging neutral atoms forming an array of qubits (14) so as to obtain the states of the neutral atoms after a quantum computation, comprising at least an analog quantum computation operation, has been performed on the array of qubits (14), the neutral atoms having a plurality of energy states comprising at least: a dark state, a fundamental state, an intermediate state and an excited state, each neutral atom being either in the excited state or in the fundamental state at the end of said quantum computation, the system (16) comprising:

   - a first laser source (30) suitable to address a first laser beam on the array of qubits (14) so as to transfer neutral atoms in the fundamental state to the dark state,
   - a second laser source (32) suitable to address a second laser beam on the array of qubits (14) so as to transfer neutral atoms in the excited state to the fundamental state,
   - an imaging device (34) comprising:

      • a third laser source (40) suitable to address a third laser beam on the array of qubits (14) so as to transfer the neutral atoms in the fundamental state to the intermediate state,
      • a detector (42) suitable for collecting photons emitted by the neutral atoms passing from the intermediate state to the fundamental state by spontaneous emission, and for generating image(s) of the neutral atoms passing from the intermediate state to the fundamental state by spontaneous emission as a function of the collected photons, the generated image(s) enabling to obtain a state for each neutral atom of the array of qubits (14) at the end of the quantum computation, the neutral atoms imaged on the generated image(s) being considered as being in the excited state at the end of the quantum computation and the other neutral atoms being considered as being in the fundamental state at the end of the quantum computation.

13. A quantum computer (10) comprising:

   - a system (12) for generating an array of qubits (14) and performing a quantum computation on the array of qubits (14), the quantum computation comprising at least an analog quantum computation operation, the array of qubits (14) being formed by neutral atoms, the neutral atoms having a plurality of energy states comprising at least: a dark state, a fundamental state, an intermediate state and an excited state, and
   - a system (16) for imaging neutral atoms forming an array of qubits (14) so as to obtain the states of the neutral atoms after at least a quantum computation, comprising at least an analog quantum computation operation, has been performed on the array of qubits (14), the imaging system (16) being according to claim 12.

10

| 12 | | 16 |

# FIG.1

## FIG.2

FIG.3

$$m_I = 3/2$$

$$60S_{1/2} \quad m_J = 1/2$$

$$\Omega$$

$$5P_{3/2} \, F = 3 \qquad \Delta$$

$$m_F = 3$$

$$\Gamma$$

$$5S_{1/2} \, F = 2 \qquad m_F = 2$$

## FIG.4

Blockade configuration

FIG.5

FIG.6

Europäisches
Patentamt

European
Patent Office

Office européen
des brevets

# EUROPEAN SEARCH REPORT

**Application Number**

**EP 23 30 7115**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Julien Vaneecloo: "Nonlinear quantum optics with a single Rydberg superatom coupled to a medium-finesse cavity", THESE DE DOCTORAT DE SORBONNE UNIVERSITE, 22 June 2022 (2022-06-22), XP093161074, Retrieved from the Internet: URL:https://theses.hal.science/tel-0370196 8v1/preview/VANEECLOO_Julien_these_2022.pdf#page=2 [retrieved on 2024-05-10] * abstract * * page 31 - page 114 * * page 141 - page 177 * | 1-13 | INV. G06N10/40 |
| A | Valentin Magro: "Deterministic Free-Propagating Photonic Qubits with Negative Wigner Functions", Nature Photon, 5 September 2022 (2022-09-05), pages 688-693, XP093160827, DOI: 10.1038/s41566-023-01196-y Retrieved from the Internet: URL:https://arxiv.org/pdf/2209.02047 [retrieved on 2024-05-10] * the whole document * | 1-13 | |
| | | | **TECHNICAL FIELDS SEARCHED (IPC)** |
| | | | G06N |
| A | HAI-TAO TU ET AL: "Approaching the standard quantum limit of a Rydberg-atom microwave electrometer", ARXIV.ORG, CORNELL UNIVERSITY LIBRARY, 201 OLIN LIBRARY CORNELL UNIVERSITY ITHACA, NY 14853, 28 July 2023 (2023-07-28), XP091576912, * the whole document * | 1-13 | |

The present search report has been drawn up for all claims

| Place of search | Date of completion of the search | Examiner |
|---|---|---|
| The Hague | 13 May 2024 | Tsakonas, Athanasios |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOÏC HENRIET** ; **LUCAS BEGUIN** ; **ADRIEN SIGNOLES** ; **THIERRY LAHAYE** ; **ANTOINE BRO-WAEYS** ; **GEORGES-OLIVIER REYMOND** ; **CHRISTOPHE JURCZAK**. *Quantum computing with neutral atoms. Quantum*, September 2020, vol. 4, ISSN 2521-327X, 327